# EUROPEAN PATENT SPECIFICATION

(11) **EP 3 115 347 B1**
(45) Date of publication and mention of the grant of the patent: **01.11.2017**
(21) Application number: 15002012.1
(22) Date of filing: 06.07.2015
(51) Int. Cl.: C04B 35/195, C04B 35/626

(54) **PROCESS FOR MANUFACTURING CORDIERITE CERAMICS HAVING CONTROLLED AND REPRODUCIBLE MECHANICAL AND THERMAL PROPERTIES**
VERFAHREN ZUR HERSTELLUNG VON CORDIERITKERAMIKEN MIT KONTROLLBAREN UND REPRODUZIERBAREN MECHANISCHEN UND THERMISCHEN EIGENSCHAFTEN
PROCÉDÉ DE FABRICATION DE CÉRAMIQUES EN CORDIÉRITE AVEC PROPRIÉTÉS THERMIQUES ET MÉCANIQUES REPRODUCTIBLES ET CONTRÔLABLES

(43) Date of publication of application: 11.01.2017
(73) Proprietor: Razvojni center eNeM Novi materiali, d.o.o., 1410 Zagorje ob Savi (SI)
(72) Inventor: BANTAN, Ines, 1411 Izlake (SI); KUSCER Hrovatin, Danjela, 1000 Ljubljana (SI); HOLC, Janez, 1234 Menges (SI)
(74) Representative: Macek, Gregor

(56) References cited:
- EP-A1- 0 545 008
- WO-A1-00/40521
- WO-A1-01/16049
- WO-A1-01/91882
- US-A1- 2007 141 301
- WPI WORLD PATENT INF, 27 September 1974 (1974-09-27), XP002134860,

## Description

The object of the invention is a process according to claim 1 for manufacturing cordierite ceramics having controlled and reproducible properties for electrotechnology, metallurgy and heating technology. Cordierite ceramics of the invention belongs to a group of alkaline earth aluminosilicates. Properties of cordierite ceramics are low thermal expansion coefficient, excellent resistance to temperature changes, low dielectric constant, good chemical resistance and high mechanical flexural strength.

It is used in electrotechnology, metallurgy and heating technology. Due to low thermal expansion and relatively high mechanical flexural strength it is used in areas of rapid and huge temperature changes. Some examples are supports of electric heaters and resistors and supports for sintering of products. Properties of cordierite ceramics are defined in Standard IEC 60672-3, Ceramic and glass-insulating materials. Cordierite ceramics belongs to subgroups C 410 and C 520. The invention discloses a material from subgroup C 410, which is dense cordierite ceramics having minimum mechanical flexural strength of 60 MPa and a thermal expansion coefficient between 2 and 4 x 10⁻⁶ K⁻¹ in the temperature range from 30 to 600 °C. Cordierite ceramics of type C 410 should meet requirements for higher mechanical strength, low thermal expansion coefficient and a more reproducible and controlled manufacturing of final ceramic products.

Cordierite ceramics products are mostly fabricated from natural materials that are ground and homogenised in water and then formed in their raw state by using various ceramic technological processes, finally blanks are fired at high temperatures. Firing is performed at temperatures exceeding 1300 °C. During a firing process, numerous phase conversions of raw materials take place, a glass phase and crystalline phases occur. The amount of cordierite depends on raw material used and the temperature and time of firing. A mineralogical composition of fired cordierite ceramics is the cordierite mineral and a glass phase, whereas mullite, spinel, corundum and quartz or other crystalline forms of silicon oxide may be present in small quantities as well. Generally used raw materials for the preparation of cordierite ceramics of type C 410 are: talc, clay components and feldspar. Clay components are natural plastic components that allow plastic deformation of a suspension and form the cordierite mineral together with talc and silicon oxide during the firing process. Feldspars are fluxing agents that form a glass phase during the firing process and thus allow densification of cordierite ceramics.

Accessible literature and patents mostly describe preparation of pure cordierite ceramics that is used in supports for catalysts in automotive and chemical industries. This ceramics is predominantly single-phase ceramics and contains only the cordierite mineral.
Cordierite ceramics were prepared by various methods for example co-precipitation (Y. Kobayashi, K. Sumi, E. Kato, Preparation of dense cordierite ceramics from magnesium compounds and kaolinite without additives, Cer. Int., 26 (2000) 739-743*;* K. Sumi, Y. Kobayashi, E. Kato, Synthesis and sintering of cordierite from ultrafine particles of magnesium hydroxide and kaoline, J. Am. Ceram. Soc., 81 [4] (1998) 1029-1032*),* sol-gel *(*M. Okuyama, T. Fukui, C. Sakurai, Effect of complex precursors on alkoxide-derived cordierite powder, J. Am. Ceram. Soc., 75 [1] (1992) 153-160*),* re-crystallisation of melted glasses with a nominal cordierite composition (S. P. Hwang, J.M. Wu, Effect of composition on microstructural development in MgO-Al2O3-SiO2 glass -ceramics, J. Am. Ceram. Soc., 84 [5](2012), 1108-1112*)* and solid-state synthesis from pure oxides and/or nitrates (S. Mei, J. Yang, R. Martins, J. M. F. Ferreira, Synthesis. Characterisation, and processing of cordierite-glass particles modified by coating with alumina precursor, J. Am. Ceram. Soc., 85 [1] (2002) 155-160*;* Z. M. Shi, Sintering additives to eliminate interphases in cordierite ceramics, J. Am. Ceram. Soc., 88 [5] (2005) 1297-1301). However, these methods require either rather expensive precursors or high temperatures for processing cordierite. These are not an option in the preparation of cordierite ceramics of type C 410 as disclosed herein as they are too expensive.

In the preparation of cordierite ceramics of type C 410 mostly natural materials are used, such as talc, clay components, feldspar and, if needed, synthetic aluminium oxide and silicon oxide. These raw materials have particles of a size up to several millimetres. So they need to be ground in order to react among themselves and to form cordierite ceramics during firing. During grinding the raw materials are efficiently homogenised and the particle size decreases to an average size of particles below 20 micrometres. The materials with small particles chemically react among themselves more effectively and consequently more cordierite is formed. Different particle sizes of aluminium oxide or aluminium oxide sources may have impact on the course of reactions during firing and consequently on the final properties of cordierite ceramics. The accessible literature does not provide any data on the impact of quantity, particle size and chemical shape of aluminium oxide on the properties of cordierite ceramics of type C 410.

The task and the goal of this invention is a process for manufacturing such cordierite ceramics of type C 410 that will have controlled and reproducible properties: low thermal expansion coefficient and high mechanical strength.

The task of the invention is solved by a process of manufacturing cordierite ceramics, wherein the source of aluminium oxide is synthetic compounds corundum, boehmite, aluminium hydroxide or a mixture thereof; the phases are equally distributed, which allows firing of blanks at a temperature ranging from 1270 to 1350 °C and, after the firing, the ceramics has mechanical flexural strength exceeding 70 MPa and thermal expansion coefficient lower than 3.2 x 10⁻⁶K⁻¹.

The starting material, i.e., a mixture for the preparation of cordierite ceramics of the invention, contains the following ingredients in % by weight:
- 15 to 30 % of talc
- 20 to 50 % of clay components
- 5 to 10 % of potassium alumosilicate
- 1 to 25 % of aluminium oxide source in the form of corundum, i. e. α - Al₂O₃, boehmite, i. e. aluminium oxyhydroxide - AlOOH or aluminium hydroxide - Al(OH)₃
- 5 to 10 % of silicon oxide source such as quartz
- additives, such as surfactants e. g. polyphosphates, polyacrylate, lignosulphonates, and binders e. g. polyvinyl alcohol, polyethylene glycol, polyvinyl butyral.

According to the process of the invention, the starting material is wet ground in a grinder that is coated with a ceramic coating made from a material having hardness identical to Al₂O₃ or higher and contains corundum ceramic balls containing from 90 % by weight to 94 % by weight of Al₂O₃. Grinding is performed for 4 to 24 hours to reach an average particle size below 15 micrometres. Particle size is controlled by a laser granulometer. After the grinding, part of the water is removed from the suspension, the suspension is poured onto a dry plaster surface where it is left to dry up to a water content of 15 to 35 % by weight. After drying, the water content in the ceramic material should be 15 to 35 % by weight to allow for forming of products in an extruder. The blanks are dried in a drier at 105 °C for 10 to 24 hours to reach the final content of water of 1 % by weight or less. The blanks are fired at a temperature between 1270 and 1350 °C for 1 hour to 10 hours, so that cordierite ceramics of the invention is obtained. While fired, the blanks are in a vertical or horizontal position. After the firing is completed, the products can already have the final shape and dimensions, if not, they are cut to final dimensions and superficially treated if needed.

If an aluminium oxide source with a size particle exceeding 2 micrometres is added, we obtain cordierite ceramics having mechanical flexural strength of 111 to 115 MPa and thermal expansion coefficient from 2.8 to 3.2 x 10⁻⁶ K⁻¹ in the range from 30 to 600 °C. If an aluminium oxide source with a size particle below 2 micrometres is added, we obtain cordierite ceramics having mechanical flexural strength of 70 to 90 MPa and thermal expansion coefficient from 2.3 to 2.8 x 10-6 K⁻¹ in the range from 30 to 600 °C.

### Embodiment 1

Ingredients that contain natural humidity: corundum with an average granule size of 5 micrometres (493 g), clays (798 g), kaolin (505 g), potassium feldspar (203 g), talc (756 g) and silicon oxide source (276 g) are given to a grinder, water, surfactants (17 g) and a binder (6 g) are added, such that the final suspension has a weight ratio of 60/40 between dry matter and water. The mixture is ground for 18 hours or until an average granule size of 11 micrometres is reached. After the grinding is completed, the suspension is poured onto a dry plaster surface. The plastic mass containing 23 % of water is used to form test blanks in an extruder for measuring flexural strength and thermal expansion coefficient. The test blanks are dried at a temperature of 105 ° for a sufficient time to contain less than 1 % of humidity and then fired at a temperature of 1300 °C for 2 hours. The fired test blanks have mechanical flexural strength of 111 MPa and thermal expansion coefficient of 3.2 x 10⁻⁶ K⁻¹ in the range 30 to 600 °C.

### Embodiment 2

Ingredients that contain natural humidity: corundum with an average granule size of 2 micrometres (493 g), clays (798 g), kaolin (505 g), potassium feldspar (203 g), talc (756 g) and silicon oxide source (276 g) are given to a grinder, water, surfactants (17 g) and a binder (6 g) are added, such that the final suspension has a weight ratio of 60/40 between dry matter and water. The mixture is ground for 16 hours or until an average granule size of 9 micrometres is reached. After the grinding is completed, the suspension is poured onto a dry plaster surface. The plastic mass containing 24 % of water is used to form test blanks in an extruder for measuring flexural strength and thermal expansion coefficient. The test blanks are dried at a temperature of 105 ° for a sufficient time to contain less than 1 % of humidity and then fired at a temperature of 1300 °C for 2 hours. The fired test blanks have mechanical flexural strength of 115 MPa and thermal expansion coefficient of 3.0 x 10⁻⁶ K⁻¹ in the range 30 to 600 °C.

### Embodiment 3

Ingredients that contain natural humidity: corundum with an average granule size of 0.65 micrometres (299 g), clays (484 g), kaolin (306 g), potassium feldspar (123 g), talc (459 g) and silicon oxide source (167 g) are given to a grinder, water, surfactants (11 g) and a binder (4 g) are added, such that the final suspension has a weight ratio of 40/60 between dry matter and water. The mixture is ground for 9 hours or until an average granule size of 9 micrometres is reached. After the grinding is completed, the suspension is poured onto a dry plaster surface. The plastic mass containing 32 % of water is used to form test blanks in an extruder for measuring flexural strength and thermal expansion coefficient. The test blanks are dried at a temperature of 105 ° for a sufficient time to contain less than 1 % of humidity and then fired at a temperature of 1300 °C for 2 hours. The fired test blanks have mechanical flexural strength of 70 MPa and thermal expansion coefficient of 2.3 x 10⁻⁶ K⁻¹ in the range 30 to 600 °C.

### Embodiment 4

Ingredients that contain natural humidity: aluminium hydroxide with an average granule size of 1,3 micrometres (684 g), clays (732 g), kaolin (465 g), potassium feldspar (186 g), talc (695 g) and silicon oxide source (258 g) are given to a grinder, water, surfactants (17 g) and a binder (6 g) are added, such that the final suspension has a weight ratio of 60/40 between dry matter and water. The mixture is ground for 15 hours or until an average granule size of 7 micrometres is reached. After the grinding is completed, the suspension is poured onto a dry plaster surface. The plastic mass containing 24 % of water is used to form test blanks in an extruder for measuring flexural strength and thermal expansion coefficient. The test blanks are dried at a temperature of 105 ° for a sufficient time to contain less than 1 % of humidity and then fired at a temperature of 1300 °C for 2 hours. The fired test blanks have mechanical flexural strength of 77 MPa and thermal expansion coefficient of 2.7 x 10⁻⁶ K⁻¹ in the range 30 to 600 °C.

### Embodiment 5

Ingredients that contain natural humidity: boehmite with an average granule size of 1,8 micrometres (560 g), clays (775 g), kaolin (489 g), potassium feldspar (197 g), talc (733 g) and silicon oxide source (273 g) are given to a grinder, water, surfactants (17 g) and a binder (6 g) are added, such that the final suspension has a weight ratio of 60/40 between dry matter and water. The mixture is ground for 16 hours or until an average granule size of 9 micrometres is reached. After the grinding is completed, the suspension is poured onto a dry plaster surface. The plastic mass containing 23 % of water is used to form test blanks in an extruder for measuring flexural strength and thermal expansion coefficient. The test blanks are dried at a temperature of 105 ° for a sufficient time to contain less than 1 % of humidity and then fired at a temperature of 1300 °C for 2 hours. The fired test blanks have mechanical flexural strength of 90 MPa and thermal expansion coefficient of 2.8 x 10⁻⁶ K⁻¹ in the range 30 to 600 °C.

## Claims

1. A process for manufacturing cordierite ceramics of type C410 **characterized in that** it includes:
- wet grinding of mixtures of ingredients in % by weight:
- 15 to 30 % of talc
- 20 to 50 % of clay components
- 5 to 10 % of potassium alumosilicate
- 1 to 25 % of aluminium oxide source selected from synthetic corundum - α - Al₂O₃, aluminium hydroxide - Al(OH)₃ or boehmite - AlOOH or a mixture thereof with an average particle size in the range from 0.05 to 10 micrometeres,
- 5 to 10 % of silicon oxide source,
- additives, such as surfactants and binders,
wherein the grinding is performed for 4 to 24 hours to reach an average particle size of all ingredients below 15 micrometres and the grinding of said mixture is performed in a grinder that is coated with a ceramic coating containing corundum ceramic balls containing from 90 % by weight to 94 % by weight of Al₂O₃;
- after the grinding, the suspension is poured onto a dry plaster surface where it is left to dry up to a water content of 15 to 35 % by weight, from which blanks are made;
- drying of blanks in a drier at 105 °C for 10 to 24 hours, such that they contain less than 1 % by weight of humidity;
- firing of blanks at a temperature of 1270 to 1350 °C for 1 hours to 10 hours,
said cordierite ceramics of type C410 having the mechanical flexural strength exceeding 70 MPa and thermal expansion coefficient lower than 3.2 x 10⁻⁶ K⁻¹ in the range from 30 to 600°C.

## Patentansprüche

1. Verfahren zur Herstellung von Cordierit-Keramiken des Typs C410, **dadurch gekennzeichnet, dass** es umfasst:
- Nassmahlen der Mischungen von Inhaltsstoffen in Gew.-%:
- 15 bis 30 % Talkum
- 20 bis 50 % Tonkomponenten
- 5 bis 10 % Kaliumaluminosilikat
- 1 bis 25 % der Aluminiumoxidquelle ausgewählt aus Korund - α - Al₂O₃, Aluminiumhydroxid - Al(OH)₃ und Böhmit AlOOH oder einer Mischung davon mit einer mittleren Teilchengröße im Bereich von 0,05 bis 10 Mikrometer,
- 5 bis 10 % der Siliziumoxidquelle
- Additive wie Tenside und Bindemittel,
wobei das Mahlen 4 bis 24 Stunden durchgeführt wird, um eine mittlere Teilchengröße von allen Inhaltsstoffen unter 15 Mikrometer zu erreichen und das Mahlen der Mischung in einer Schleifmaschine durchgeführt wird, die mit einer keramischen Beschichtung beschichtet ist, die Korund-Keramikkugeln enthält, die 90 Gew.-% bis 94 Gew.-% von Al₂O₃ enthalten;
- nach dem Mahlen wird die Suspension auf eine trockene Gipsoberfläche gegossen, wo sie gelassen wird, bis sie zu einem Wassergehalt von 15 bis 35 Gew.-% austrocknet, aus der Rohlinge hergestellt werden;
- Trocknen der Rohlinge in einem Trockner bei 105 °C für 10 bis 24 Stunden, so dass sie weniger als 1 Gew.-% Feuchtigkeit enthalten;
- Brennen der Rohlinge bei einer Temperatur von 1270 bis 1350 °C für 1 Stunde bis 10 Stunden, wobei die Cordierit-Keramik des Typs 410 eine mechanische Biegefestigkeit von über 70 MPa und einen Wärmeausdehnungskoeffizienten unter 3,2 x 10⁻⁶ K⁻¹ im Bereich von 30 bis 600 °C aufweist.

## Revendications

1. Procédé de fabrication de céramiques de cordierite de type C410 **caractérisé en ce qu'**il comprend :
- broyage humide de mélanges d'ingrédients en % en poids :
- 15 à 30 % de talc
- 20 à 50 % de composants d'argile
- 5 à 10 % d'aluminosilicate de potassium
- 1 à 25 % d'une source d'oxyde d'aluminium choisie parmi le corindon - α - Al₂O₃, l'hydroxyde d'aluminium - Al(OH)₃ et la boehmite - AlOOH ou un mélange de ceux-ci ayant une dimension de particules moyenne dans la plage de 0,05 à 10 micromètres
- 5 à 10 % d'une source d'oxyde de silicium
- additifs, tels que des tensioactifs et des liants,
le broyage étant effectué pendant 4 à 24 heures pour atteindre une dimension de particules moyenne inférieure à 15 micromètres et le broyage dudit mélange étant effectué dans un broyeur qui est revêtu d'un revêtement céramique contenant des billes de céramique de corindon contenant de 90 % en poids à 94 % en poids d'Al₂O₃ ;
- après le broyage, la suspension est versée sur une surface de plâtre sèche où elle est laissée à sécher jusqu'à atteindre une teneur en eau de 15 à 35 % en poids, à partir de laquelle des ébauches sont fabriquées ;
- séchage d'ébauches dans un séchoir à 105 °C pendant 10 à 24 heures, de telle sorte qu'elles contiennent moins de 1 % en poids d'humidité ;
- cuisson d'ébauches à une température de 1270 à 1350 °C pendant 1 heure à 10 heures, ladite céramique de cordiérite de type C410 ayant une résistance à la flexion mécanique dépassant 70 MPa et un coefficient de dilatation thermique inférieur à 3,2 x 10⁻⁶ K⁻¹ à des températures comprises entre 30 et 600 °C.
